# EUROPEAN PATENT SPECIFICATION

(11) **EP 2 224 520 B1**
(45) Date of publication and mention of the grant of the patent: **27.03.2013**
(21) Application number: 08853450.8
(22) Date of filing: 28.11.2008
(51) Int. Cl.: H01M 8/02, H01M 8/12

(54) **HORIZONTALLY-STRIPED SOLID-OXIDE FUEL BATTERY CELL STACK AND FUEL BATTERY**
HORIZONTAL GESTREIFTER FESTOXID-BRENNSTOFFBATTERIEZELLENSTAPEL UND BRENNSTOFFBATTERIE
EMPILEMENT DE PILES DE BATTERIE À COMBUSTIBLE À OXYDE SOLIDE EN BANDE HORIZONTALE ET BATTERIE À COMBUSTIBLE

(30) Priority: 30.11.2007 JP 2007309899
(43) Date of publication of application: 01.09.2010
(73) Proprietor: Kyocera Corporation, Kyoto-shi Kyoto 612-8501 (JP); Tokyo Gas Co., Ltd., Tokyo 105-8527 (JP)
(72) Inventor: NISHIHARA, Masato, Kirishima-shi Kagoshima 899-4312 (JP); INOUE, Shushin, Kirishima-shi Kagoshima 899-4312 (JP); HATAE, Toru, Tokyo 105-8527 (JP)
(74) Representative: Ackroyd, Robert
(86) International application number: PCT/JP2008/071631
(87) International publication number: WO 2009/069739

(56) References cited:
- JP-A- 2005 135 729
- JP-A- 2005 149 995
- JP-A- 2005 346 991
- JP-A- 2006 019 059
- JP-A- 2007 157 370
- JP-A- 2007 250 368
- US-A1- 2006 147 778

## Description

### TECHNICAL FIELD

The present invention relates to a segmented-in-series solid oxide fuel cell stack and a fuel cell using the same.

### BACKGROUND ART

In recent years, various types of fuel cells have been proposed as next generation energy. These fuel cells are formed by storing a plurality of fuel cell stacks in a storage container. Each fuel cell stack is formed by electrically connecting a plurality of fuel cells in series. As these fuel cells, solid polymer type, phosphoric acid type, molten carbonate type, and solid oxide type are known. Among others, solid oxide fuel cell have the advantage that the efficiency of electric power generation is high and operating temperature is as high as 700 to 1000°C, thus permitting utilization of the waste heat thereof. The research and development thereof have been promoted.

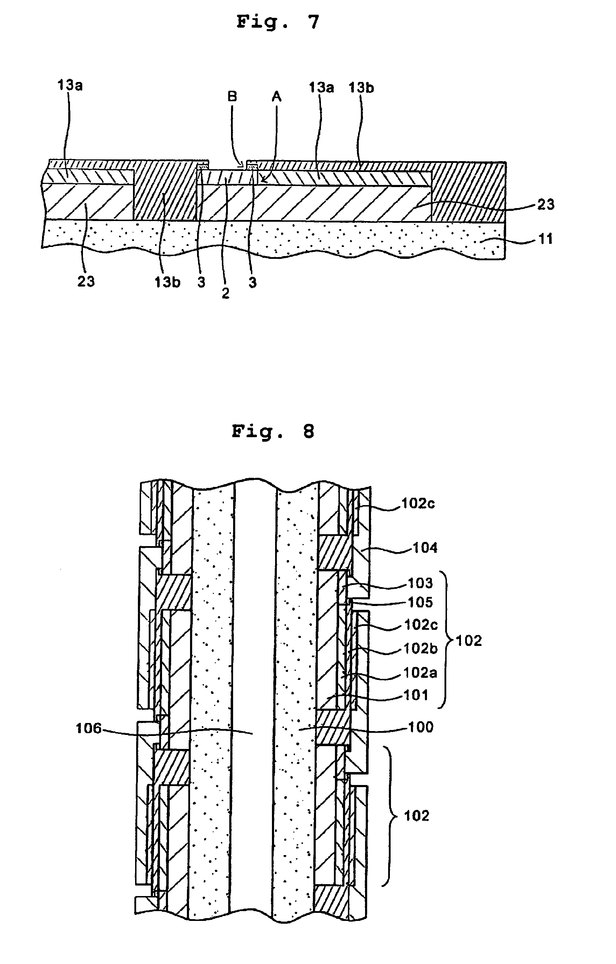

The solid oxide fuel cell stack shown in Fig. 8 is so-called "segmented-in-series type" having a support body 100 and a plurality of fuel cells 102. The support body 100 is electrically insulated and porous and has a hollow flat plate shape. A gas passage 106 is formed within the support body 100.

The fuel cell 102 has a multilayer structure in which an active fuel electrode layer 102a and a current collector (interconnector) 103 are arranged side by side on a current collecting fuel electrode layer 101, and a solid electrolyte layer 102b and an air electrode layer 102c are sequentially laminated on the active fuel electrode layer 102a. The current collector 103 and the solid electrolyte layer 102b are connected to each other through an intermediate layer (an adhesive layer) 105 for the purpose of sealing properties. A plurality of the fuel cells 102 are arranged side by side at predetermined intervals on the surface of the support body 100 along a longitudinal direction of the support body 100.

The fuel cells 102 adjacent to each other are electrically connected in series by an intercell connection member 104, respectively. That is, the current collector 103 of one fuel cell 102 and the air electrode layer 102c of the other fuel cell 102 are connected to each other by the intercell connection member 104.

In the above segmented-in-series solid oxide fuel cell stack (hereinafter referred to as "fuel cell stack" in some cases), the oxygen ionic conductivity of the solid electrolyte layer 102b is increased at 600°C or above. When gas containing oxygen is admitted into the air electrode layer 102c, and gas containing hydrogen is admitted into the active fuel electrode layer 102a and the electric collecting fuel electrode layer 101 at such a temperature, the oxygen concentration difference between the air electrode layer 102c and the active fuel electrode layer 102a is increased, and a potential difference occurs between the air electrode layer 102c and the active fuel electrode layer 102a.

Owing to the potential difference, oxygen ions transfer from the air electrode layer 102c through the solid electrolyte layer 102b to the active fuel electrode layer 102a. The transferred oxygen ions combine with hydrogen to form water in the active fuel electrode layer 102a, and electrons occur simultaneously in the active fuel electrode layer 102a. That is, the electrode reaction of the following formula (i) occurs in the air electrode layer 102c, and the electrode reaction of the following formula (ii) occurs in the active fuel electrode layer 102a.

Air electrode layer 102c:

   1/2O₂+2e⁻ → O²⁻ (i)
Active fuel electrode layer 102a:

   O²⁻+H₂ → H₂O+2e⁻ (ii)

The electrical connection between the active fuel electrode layer 102a (the current collector 103) and the air electrode layer 102c causes the electron transfer from the active fuel electrode layer 102a to the air electrode layer 102c, and electromotive force occurs between both electrodes. Thus, the above reactions are caused continuously in the solid oxide fuel cell stack by supplying oxygen and hydrogen, and the electromotive force is generated, thereby generating electricity (for example, refer to patent document 1).

Particularly, the segmented-in-series solid oxide fuel cell stack has the advantage that a high voltage is obtained with a small number of fuel cell stacks by arranging side by side a plurality of the fuel cells 102 causing the above reactions on the surface of the support body 100 in its longitudinal direction, and by connecting them in series.

However, the side-by-side arrangement of a plurality of fuel cells 102 of multilayer structure requires a high-density laminate arrangement of the individual constitutional members, namely, the current collecting fuel electrode layer 101, the active fuel electrode layer 102a, the solid electrolyte layer 102b, the air electrode layer 102c, the current collector 103 and the intermediate layer 105, on the surface of the support body 100. These constitutional members have different thicknesses and areas, thus being extremely susceptible to defects such as separation, cracking or the like during lamination. Further, the individual fuel cells 102 are electrically connected in series. Therefore, if separation, cracking or the like occurs in a current flow interruption direction in the current collecting fuel electrode layer 101, the active fuel electrode layer 102a (the inner electrode layer) or the solid electrolyte layer 102b within one fuel cell 102, the electrical output of the whole fuel cell stack can be lost.
Patent document 1: Japanese Unexamined Patent Application Publication No. 10-003932

In JP 2005 149995 a porous metal IC film is formed on a substrate tube. A fuel electrode and a dense metal IC film are formed so as to cover a part of the porous metal IC film. A solid electrolyte membrane is formed on the fuel electrode and the dense metal IC film so as to cover the whole of the fuel electrode and the periphery of the dense metal IC film. An air electrode is formed on the solid electrolyte membrane so as to cover a part of the solid electrolyte membrane, a porous metal IC film is formed so as to cover the air electrode and an exposed part of the dense metal IC film. A peeling-off prevention film is formed in a break part of the porous metal IC film so as to cover the dense metal IC film.

US 2006/0147778 discloses a solid oxide fuel cell module comprising a substrate with an internal fuel flow part provided therein, at least a face thereof, in contact with cells, and interconnectors, being an insulator, a plurality of the cells each comprised of an anode, an electrolyte, and a cathode, stacked in sequence, formed on a surface of the substrate, and the interconnections each electrically connecting in series the cells adjacent to each other, wherein the respective cells are varied in area along the direction of fuel flow, and solid oxide fuel cell bundled modules using the same.

### DISCLOSURE OF THE INVENTION

### PROBLEMS TO BE SOLVED BY THE INVENTION

An advantage of the present invention is to provide a segmented-in-series solid oxide fuel cell stack capable of suppressing occurrence of separation, cracking or the like in an inner electrode layer or the like and also achieving high output and high reliability, as well as a fuel cell using the same.

### MEANS FOR SOLVING THE PROBLEMS

The present inventors conducted tremendous research efforts to solve the above problem and found the following knowledge. That is, the occurrence situation of separation or cracking differs depending on the arrangements of an inner electrode layer, a solid electrolyte layer, a current collector and an intermediate layer when these constitutional members are laminated on the surface of a support body.

Specifically, when a second inner electrode layer (an active fuel electrode layer), the solid electrolyte layer, the current collector and the intermediate layer are laminated on a first inner electrode layer (a current collecting fuel electrode layer), a remarkable difference in the degree of occurrence of separation or cracking occurred in the inner electrode layer or the like, depending on whether these constitutional members are contacted with each other or they are formed with a slight clearance between specific constitutional members.

The point that the shrinkage behaviors of the individual constitutional members differ in the situation of drying and/or heat treatment of the individual constitutional members contributes to these phenomena. Additionally, the point that the residual stress increases or decreases due to the shrinkage behavior differences among the second inner electrode layer (the active fuel electrode layer), the current collector and the intermediate layer to be laminated on the individual first inner electrode layer (the current collecting fuel electrode layer) also contributes to these phenomena.

Based on the above knowledge, further tremendous research efforts were made. That is, among these constitutional members, the current collector and the second inner electrode layer were formed with a predetermined clearance therebetween on the first inner electrode layer. Thereby, the residual stress occurred in boundary sections of these constitutional members during sintering was reduced, thus enabling suppression of separation or crack. Additionally, the current flow between the individual fuel cells were stabilized, and variations in the performance of the fuel cell stacks were considerably suppressed, thus achieving a high-output highly reliable segmented-in-series solid oxide fuel cell stack.

That is, the segmented-in-series solid oxide fuel cell stack of the present invention comprises: an electrically-insulating porous support body having a gas passage therein; a plurality of fuel cells arranged side by side on a surface of the support body. Each fuel cell has a first inner electrode layer; a current collector and a second inner electrode layer arranged side by side on the first inner electrode layer; and a solid electrolyte layer and an outer electrode layer sequentially laminated on the second inner electrode layer, and has a multilayer structure in which the solid electrolyte layer is extended and connected to the current collector through an intermediate layer. The current collector of one fuel cell and the outer electrode layer of the other fuel cell adjacent to the one fuel cell are electrically connected to each other through the current collector included in the one fuel cell, so that a plurality of the fuel cells are connected in series. The current collector and the second inner electrode layer are arranged with a clearance of 10 to 120 µm therebetween on the first inner electrode layer.

The fuel cell of the present invention is formed by storing a plurality of the segmented-in-series solid oxide fuel cell stacks in a storage container.

The method of manufacturing a segmented-in-series solid oxide fuel cell stack of the present invention comprises the following steps (I) to (IV):
(I) the step of obtaining an electrically-insulating porous support body having a gas passage therein;
(II) the step of arranging side by side a plurality of first inner electrode layers on a surface of the obtained support body, and arranging side by side on each of the first inner electrode layers a current collector and a second inner electrode layer with a clearance of 10 to 120 µm therebetween after sintering;
(III) the step of arranging side by side on the surface of the support body a plurality of fuel cells having a multilayer structure by disposing an intermediate layer on the current collector, and by laminating a solid electrolyte layer over the intermediate layer on the second inner electrode layer, and by laminating an outer electrode layer on the solid electrolyte layer; and
(IV) the step of electrically connecting the current collector of one fuel cell and the outer electrode layer of the other fuel cell adjacent to the one fuel cell.

### EFFECT OF THE INVENTION

In accordance with the segmented-in-series solid oxide fuel cell stack and the manufacturing method thereof according to the present invention, the occurrence of separation of the individual members (for example, the second inner electrode layer or the like) during lamination, and the occurrence of cracks between the individual members can be suppressed, and they can be structurally and electrically stabilized, thereby providing the high-output highly reliable segmented-in-series solid oxide fuel cell stack.
In accordance with the fuel cell of the present invention, a compact capacity is also achieved by using a plurality of high-output segmented-in-series solid oxide fuel cell stacks, and a large amount of electricity generation is achieved with a small number of segmented-in-series solid oxide fuel cell stacks.

### BRIEF DESCRIPTION OF THE DRAWINGS

Fig. 1 is a partially broken perspective view showing a segmented-in-series solid oxide fuel cell stack according to an embodiment of the present invention;
Fig. 2 is a partially enlarged longitudinal section showing the segmented-in-series solid oxide fuel cell stack according to the embodiment of the present invention;
Fig. 3 is a schematic cross section showing a fuel cell according to an embodiment of the present invention;
Fig. 4 is a longitudinal section showing a support body according to an embodiment of the present invention;
Figs. 5(a) to 5(d) are process drawings showing a method of manufacturing a segmented-in-series solid oxide fuel cell stack according to an embodiment of the present invention;
Figs. 6(e) to 6(h) are process drawings showing the method of manufacturing the segmented-in-series solid oxide fuel cell stack according to the embodiment of the present invention;
Fig. 7 is an explanatory drawing showing a separated portion and a leaked portion in an example; and
Fig. 8 is an enlarged longitudinal section showing a part of a conventional solid oxide fuel cell stack.

### PREFERRED EMBODIMENTS FOR CARRYING OUT THE INVENTION

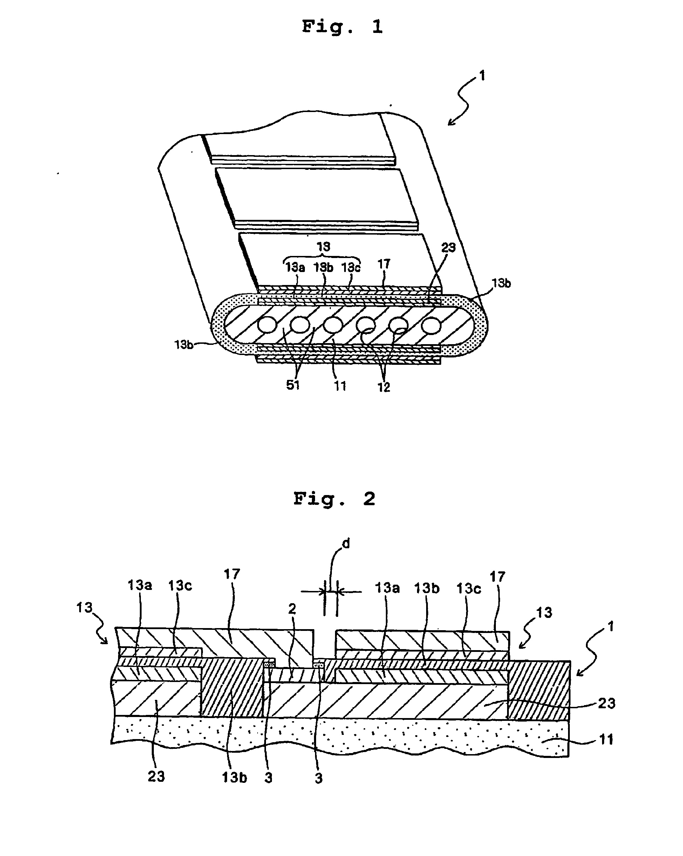

An embodiment of the segmented-in-series solid oxide fuel cell stack and an embodiment of the fuel cell of the present invention are described below in detail with reference to Figs. 1 to 3. As shown in Fig. 1, the fuel cell stack 1 of the present embodiment comprises a hollow plate-like electrically isolated porous support body 11, and fuel cell 13. The fuel cell stack 1 is the "segmented-in-series type" in which a plurality of fuel cells 13 are arranged side by side along the longitudinal direction on front and rear surfaces of the support body 11, and these fuel cells 13 are connected in series through an intercell connection member 17, as shown in Fig. 2.

Each fuel cell 13 has a first inner electrode layer (hereinafter referred to as a "current collecting fuel electrode layer 23" in some cases) disposed on the support body 11, a current collector 2 and a second inner electrode layer (hereinafter referred to as an "active fuel electrode layer 13a" in some cases) which are disposed on the current collecting fuel electrode layer 23, and a solid electrolyte layer 13b and an air electrode layer 13c (an outer electrode layer) which are sequentially laminated on the active fuel electrode layer 13a. The fuel cell 13 has a multilayer structure that the solid electrolyte layer 13b is extended and connected to the current collector 2 through an intermediate layer 3 (an adhesive layer). The current collecting fuel electrode layer 23 is an electrode having a current collecting function. The active fuel electrode layer 13a is an active electrode contributing to the reaction with the solid electrolyte layer 13b.

The fuel cells 13 adjacent to each other are electrically connected in series by the intercell connection member 17. That is, the frame-like intermediate layer 3 is formed in a top-surface outer peripheral section of the current collector 2 of one fuel cell 13. The top surface of the current collector 2 exposed from the frame-like intermediate layer 3 is covered with one end of the intercell connection member 17, and the other end of the intercell connection member 17 is formed on the air electrode layer 13c of the other fuel cell 13. Consequently, the current collector 2 of one fuel cell 13 and the air electrode layer 13c of the other fuel cell 13 adjacent to one fuel cell 13 are electrically connected to each other, so that the fuel cells 13 adjacent to each other are electrically connected in series.

The support body 11 is porous, and a plurality of gas passages 12 having a small inner diameter are formed therein (refer to Fig. 1). These gas passages 12 are divided by a partition 51 and penetratedly formed so as to extend longitudinally. In terms of electric power generation performance and structural strength, the number of the gas passages 12 is preferably, for example, 2 to 40, more preferably 6 to 20. When a plurality of gas passages 12 are formed within the support body 11, the support body 11 can be made into a flat plate shape than when a large gas passage is formed within the support body 11. This increases the area of the fuel cells 13 per volume of the fuel cell stack 1, thereby increasing the amount of electric power generation. It is therefore capable of decreasing the number of the fuel cell stacks 1 for obtaining the necessary amount of electric power generation. It is also capable of decreasing the number of connection portions between the fuel cell stacks 1 adjacent to each other.

By admitting a fuel gas (a hydrogen-containing gas) into the gas passages 12, and by exposing the air electrode layer 13c to an oxygen-containing gas such as air, the electrode reactions shown in the foregoing formulas (i) and (ii) occur between the active fuel electrode layer 13a and the air electrode layer 13c, and a potential difference occurs between both electrodes, thereby generating electricity.

The current collector 2 and the active fuel electrode layer 13a are arranged with a predetermined clearance d therebetween on the current collecting fuel electrode layer 23. This suppresses the occurrence of separation of the individual members and cracks between them. Particularly, this reduces the occurrences of separation of the active fuel electrode layer 13a and the current collecting fuel electrode layer 23, cracks in boundary sections between the active fuel electrode layer 13a and the current collector 2, and separation or cracks in boundary sections between the intermediate layer 3 and the current collector 2.

The clearance d is 10 to 120 µm, preferably 30 to 100 µm. When the clearance d is smaller than 10 µm, the effect of providing the clearance might not be obtained. The clearance larger than 120 µm is not preferred because the area of the fuel cell 13 (the active fuel electrode layers 13a) is decreased and the amount of electric power generation is lowered.

The solid electrolyte layer 13b is extended in the clearance d. This further improves the structural stability of the fuel cell stack 1 (the fuel cell 13). The solid electrolyte layer 13b is also extended in the clearance between the fuel cells 13 adjacent to each other. This produces an insulation section for electrically isolating the fuel cells 13 adjacent to each other.

The fuel cell of the present embodiment is constructed from the above fuel cell stacks 1. Firstly, a plurality of fuel cell stacks 1 are collected. Next, conductive members (not shown) for taking the electric power generated in the fuel cell stacks to the outside the fuel cells are attached to the fuel cell stacks located at opposite ends in the arrangement direction thereof, and these fuel cell stacks are then stored in a storage container. Thus, the fuel cell of the present embodiment is constructed.

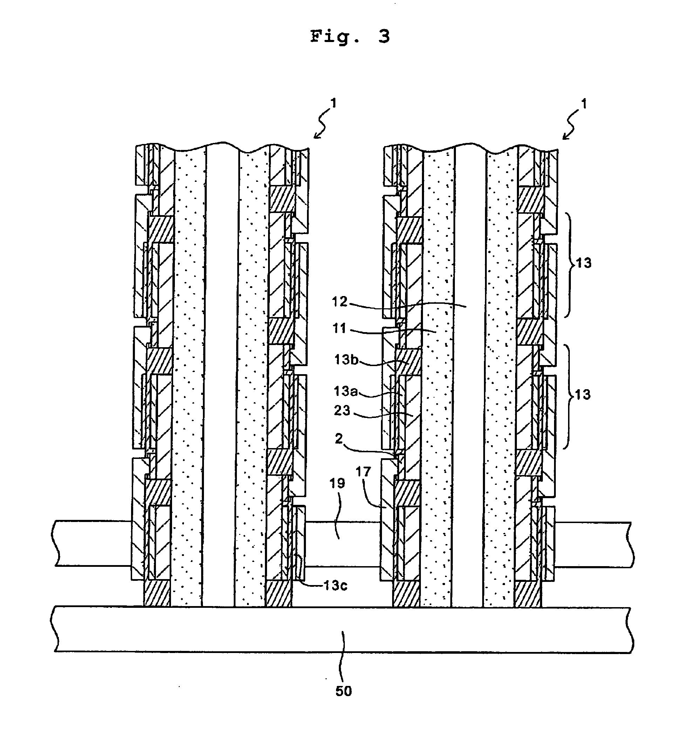

The above fuel cell generates electricity in the following manner. That is, an oxygen-containing gas such as air is admitted into the storage container, and a fuel gas such as a hydrogen-containing gas is admitted through an admitting tube into a fuel gas manifold 50 shown in Fig. 3. The admitted fuel gas is admitted into the gas passages 12 of the fuel cell stacks 1 (the support bodies 11) and flows bottom to top within the gas passages 12, and the residual fuel gas is released from the distal ends of the fuel cell stacks 1. By heating the fuel cell stacks 1 to a predetermined temperature, electricity can be generated by the fuel cell stacks 1. The used fuel gas and oxygen-containing gas are discharged outside the storage container.

As shown in Fig. 3, the fuel cell stacks 1 adjacent to each other are electrically connected to each other through a fuel cell stack interconnection member 19 disposed at their lower ends. That is, the intercell connection member 17 is disposed at the lower end of one fuel cell stack 1. The intercell connection member 17 is conducted to the current collecting fuel electrode layer 23 and the active fuel electrode layer 13a of the fuel cell 13 constituting one fuel cell stack 1. The intercell connection member 17 is also conducted to the air electrode layer 13c of the fuel cell 13 constituting the other fuel cell stack 1 through the fuel cell stack interconnection member 19.

In the fuel cell thus formed by storing a plurality of fuel cell stacks 1, the fuel cell stacks 1 adjacent to each other are electrically connected to each other through the fuel cell stack interconnection member 19, so that the fuel cell stacks 1 can be arranged densely, and the number of fuel cell stacks 1 per amount of electric power generation can be decreased. It is therefore capable of providing a compact high thermal efficiency fuel cell. In the present invention, the distal ends of the fuel cell stacks 1 correspond to the end portions of the fuel cell stacks 1 of the side opposite those connected to the manifold 50, in other words, the end portions of the fuel cell stacks 1 located downstream of the fuel gas (the release side).

The materials of the individual members constituting the fuel cell stack 1 are described below in detail.

### <Support body 11>

The support body 11 is composed of Ni or Ni oxide (NiO), alkali earth element oxide of Mg oxide (MgO) and a rare earth element oxide. Examples of the rare earth element constituting the rare earth element oxide include Y, La, Yb, Tm, Er. Ho, Dy, Gd, Sm, and Pr. Y₂O₃ or Yb₂O₃ is preferred, and Y₂O₃ is particularly preferred.

Ni or NiO is preferably contained in the support body 11 in the range of 10 to 25% by volume, particularly 15 to 20% by volume in terms of NiO. During electric power generation, NiO is usually reduced by the hydrogen-containing gas and exists as Ni.

The thermal expansion coefficient of the support body 11 is usually approximately 10.5 to 12.5×10⁻⁶(1/K). The thermal expansion coefficient of the support body 11 can be obtained as follows. That is, the support body 11 and a standard sample are set in a furnace for measurement and the furnace temperature is increased. The thermal expansion coefficient is calculated from a thermal expansion difference between the support body 11 and the standard sample, and the thermal expansion value of the standard sample.

The support body 11 preferably has electrical insulating properties and usually has a resistivity of 10⁵Ω·cm or more in order to prevent an electrical short circuit between the fuel cells 13. The resistivity is likely to decrease when Ni content exceeds the above range in terms of NiO. The adjustment of thermal expansion coefficient with respect to the fuel cell 13 tends to become difficult when the Ni content is below the above range in terms of NiO. The resistivity can be measured by four-terminal method in which both terminals of volt and current are connected to both ends of a square rod-like specimen.

The support body 11 is porous. Specifically, the support body is preferably porous to the extent that the fuel gas flowing through the gas passages 12 can be admitted into the surface of the active fuel electrode layer 13a. The open porosity of the support body 11 is preferably 25% or more, particularly in the range of 30 to 40%. The open porosity can be calculated according to Archimedian method. The adjustment of the open porosity can be optionally carried out by adjusting, for example, the amount of a burn-out material (a pore forming agent) added when manufacturing a formed body for the support body described later. Examples of the burn-out material include organic resins such as acrylic resin and polyethylene resin. The burn-out material preferably has a spherical shape, and the mean particle diameter thereof is preferably 5 to 30 µm.

### <Fuel Electrode Layer>

The fuel electrode layer (the inner electrode layer) causes the electrode reaction of the foregoing formula (ii). The fuel electrode layer of the present embodiment is formed in a two-layer structure made up of the active fuel electrode layer 13a on the side of the solid electrolyte layer 13b, and the current collecting fuel electrode layer 23 on the side of the support body 11.

### <Active Fuel Electrode Layer 13a>

The active fuel electrode layer 13a is formed from porous conductive ceramic being well known. For example, ZrO₂ (stabilized zirconia) in which a rare earth element is dissolved in its solid state, and Ni and/or NiO. As the stabilized zirconia in which the rare earth element is dissolved in its solid state, it is preferable to use the same as used in the solid electrolyte layer 13b described later.

The content of the stabilized zirconia in the active fuel electrode layer 13a is preferably in the range of 35 to 65% by volume. The Ni content is preferably in the range of 65 to 35% by volume in terms of NiO in order to exhibit excellent current collecting performance. The open porosity of the active fuel electrode layer 13a is preferably 15% or more, particularly in the range of 20 to 40%.

The thermal expansion coefficient of the active fuel electrode layer 13a is usually approximately 12.3×10⁻⁶(1/K). The thickness of the active fuel electrode layer 13a is desirably in the range of 5 to 15 µm. Consequently, the thermal stress caused by a thermal expansion difference from the solid electrolyte layer 13b can be absorbed, thereby suppressing separation or crack of the active fuel electrode layer 13a.

### <Current Collecting Fuel Electrode Layer 23>

The current collecting fuel electrode layer 23 is a mixed body of Ni or NiO and a rare earth element oxide. Ni or NiO is preferably contained in a rare earth element oxide in the range of 30 to 60% by volume in terms of NiO. The thermal expansion difference between the support body 11 and the current collecting fuel electrode layer 23 can be adjusted not to exceed 2×10⁻⁵ (1/K). During electric power generation, NiO is usually reduced by the hydrogen-containing gas, and exists as Ni.

The current collecting fuel electrode layer 23 is preferably conductive in order not to impair the current flow, and desirably has a conductivity of 400S/cm² or more. From the viewpoint of satisfactory electrical conductivity, the Ni content is desirably 30% by volume or more in terms of NiO. Like the measuring method of resistivity, the conductivity measurement can be carried out by four-terminal method.

The thermal expansion coefficient of the current collecting fuel electrode layer 23 is usually approximately 11.5×10⁻⁶(1/K). The thickness of the current collecting fuel electrode layer 23 is desirable 80 µm or more in order to improve electrical conductivity.

With the fuel electrode layer thus having the two-layer structure consisting of the active fuel electrode layer 13a on the side of the solid electrolyte layer 13b and the current collecting fuel electrode layer 23 on the side of the support body 11, it is capable of allowing the thermal expansion coefficient of the fuel cell 13 to approach the thermal expansion coefficient of the solid electrolyte layer 13b described later, without impairing connection performance with respect to the individual members constituting the fuel cell 13, by adjusting the amount of Ni contained in the current collecting fuel electrode layer 23 on the side of the support body 11 in the range of 30 to 60% by volume in terms of NiO. For example, the thermal expansion difference therebetween can be adjusted to be less than 2×10⁻⁶(1/K). It is therefore capable of reducing the thermal stress caused by the thermal expansion difference between the current collecting fuel electrode layer 23 and the solid electrolyte layer 13b during manufacturing, heating and cooling of the fuel cell stacks 1, thereby suppressing the separation or crack of the fuel electrode layer. Hence, even when electricity is generated by admitting the fuel gas (the hydrogen-containing gas), the consistency of thermal expansion coefficient with respect to the support body 11 is stably maintained, thereby effectively avoiding the defect-inferiority due to the thermal expansion difference.

### <Solid Electrolyte Layer 13b>

The solid electrolyte layer 13b is constructed of dense ceramic made up of a stabilized ZrO₂ composed of ZrO₂ in which a rare earth element or the oxide thereof is dissolved in its solid state. Examples of the rare earth element dissolved in its solid state include Sc, Y, La, Ce, Pr, Nd, Pm, Sm, Eu, Gd, Tb, Dy, Ho, Er, Tm, Yb, Lu or the like, and the oxides of these elements or the like, preferably Y, Yb, or their oxides. Alternatively, examples of the solid electrolyte layer 13b include a stabilized ZrO₂ in which 8 mol% of Y is dissolved in its solid state (8 mol% Yttoria Stabilized Zirconia, hereinafter referred to as "8YSZ"), and lanthanum gallate system (LaGaO₃ system) or the like having substantially the same thermal expansion coefficient as 8YSZ.

The solid electrolyte layer 13b has a thickness of 10 to 100 µm, for example, and its relative density according to Archimedian method is set to, for example, the range of 93% or more, preferably 95% or more. This solid electrolyte layer 13b preferably has the function as electrolyte that serves as an intermediary for the electron transfer between electrodes, and preferably has gas barrier properties in order to suppress the fuel gas or oxygen-containing gas leak (gas transmission).

Alternatively, the solid electrolyte layer 13b may be formed as follows. That is, when manufacturing the fuel cell 13, for example, a first layer is disposed on the active fuel electrode layer 13a, and a second layer is disposed on the first layer so as to be connected to the intermediate layer 3. After sintering, the first and second layers are integrated into the solid electrolyte layer 13b. In this case, the first layer disposed on the active fuel electrode layer 13b is not connected to the intermediate layer 3. It is therefore capable of suppressing the stress exerted on the intermediate layer 3 and the occurrence of separation, crack or the like in the intermediate layer 3 and the current collector 2 even if, for example, the current collecting fuel electrode layer 23b is contracted in the opposite direction of the current collector 2 during manufacturing of the fuel cell 13.

### <Air Electrode Layer 13c>

The air electrode layer 13c is formed from conductive ceramic. As the conductive ceramic, there is for example ABO₃ perovskite-type oxide. As the perovskite-type oxide, there is for example transition-metal type perovskite oxide, preferably LaMnO₃-based oxide, LaFeO₃-based oxide, LaCoO₃-based oxide or the like, particularly transition-metal type perovskite oxide having La at A-site. From the viewpoint of high electrical conductivity at relatively low temperatures of approximately 600 to 1000°C, LaCoO₃-based oxide is more preferable. In the above perovskite type oxides, La and Sr may coexist at A-site, or alternatively, Fe, Co and Mn may coexist at B-site.

This air electrode layer 13c is capable of causing the electrode reaction of the foregoing formula (i). The open porosity of the air electrode layer 13c is set to, for example, the range of 20% or more, preferably 30 to 50%. The air electrode layer 13c has excellent gas permeability when the open porosity thereof is within the above range. The thickness of the air electrode layer 13c is set to, for example, the range of 30 to 100 µm. The air electrode layer 13c has excellent current collecting performance when the thickness thereof is within the above range.

### <Current Collector 2, Intercell Connection Member 17 and Intermediate Layer 3>

The current collector 2 is used for connecting in series the fuel cells 13 adjacent to each other. The current collector 2 electrically connects the current collecting fuel electrode layer 23 and the active fuel electrode layer 13a of one fuel cell 13, and the air electrode layer 13c of the other fuel cell 13. The current collector 2 is formed from conductive ceramic. The current collector 2 preferably has reduction resistance and oxidation resistance because it contacts with the fuel gas (the hydrogen-containing gas) and the oxygen-containing gas such as air.

Therefore, as the current collector 2, it is possible to use for example conductive ceramic, metal, or metal glass containing glass. As the conductive ceramic, lanthanum chromite-based perovskite-type oxide (LaCrO₃-based oxide) is used. The conductive ceramic is preferably dense, and suitably has a relative density (Archimedian method) of for example 93% or more, particularly 95% or more. This suppresses leaks of the fuel gas passing through the gas passages 12 within the support body 11, and the oxygen-containing gas such as air passing through the outside of the air electrode layer 13c.

As the current collector 2, lanthanum chromite-based perovskite-type oxide (LaCrO₃-based oxide), or alternatively a two-layer structure made up of a metal layer and a metal glass layer containing glass may be used. The metal layer is, for example, composed of a mixture of Ag and Ni. The metal glass layer is, for example, composed of Ag and glass. The current collector having the two-layer structure of the metal layer and the metal glass layer is effective in suppressing the leak of the fuel gas passing through the gas passages 12 within the support body 11 into the intercell connection member 17, and the leak of the oxygen-containing gas passing through the outside of the air electrode layer 13c into the metal layer.

The intercell connection member 17 electrically connects the current collector 2 of one fuel cell 13 and the air electrode layer 13c of the other fuel cell 13 adjacent to one fuel cell 13. As the intercell connection member 17, for example, a porous layer constructed from Ag-Pd can be used, and other conductive ceramic or the like can also be used.

Examples of the intermediate layer 3 include Y₂O₃, a mixture of Y₂O₃ and NiO or the like. Sealing properties can be improved owing to the connection between the current collector 2 and the solid electrolyte layer 13b through the intermediate layer 3.

The thickness of the current collector 2 is 10 to 50 µm. The thickness of the intermediate layer 3 is 10 µm or less, preferably 5 to 10 µm. These ensure satisfactory sealing properties between the solid electrolyte layer 13b and the current collector 2, in addition to the density of the intermediate layer 3.

### <Fuel Cell Stack Interconnection Member 19>

No special restriction is imposed on the fuel cell stack interconnection member 19 as long as it is conducted to the air electrode layer 13c of one fuel cell stack 1 and is capable of electrically connecting one intercell connection member 17 and the air electrode layer 13c of the other fuel cell stack 1. For example, the fuel cell stack interconnection member 19 is formed from a heat resistant metal, conductive ceramic, or the like.

The connection reliability of the fuel cell stack interconnection member 19 can be improved by applying a conductive adhesive, for example, a paste containing a precious metal such as Ag or Pt, to the sections where the fuel cell stack interconnection member 19 is connected to the intercell connection member 17 or the air electrode layer 13c.

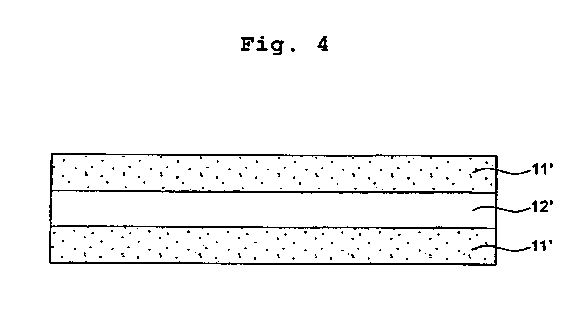

Next, the method of manufacturing the abovementioned segmented-in-series fuel cell stack 1 is described in detail with reference to Figs. 4 to 6. Firstly, a support body formed body 11' shown in Fig. 4 is manufactured. As the material of the support body formed body 11', a mixed powder is obtained by blending and mixing Ni powder, NiO powder, Y₂O₃ powder, or rare earth element stabilized zirconia powder (YSZ), each being used for adjusting thermal expansion coefficient or improving connection strength as needed, at a predetermined ratio to MgO powder whose mean particle diameter (D₅₀) (hereinafter referred to simply as "mean particle diameter") is 0.1 to 10.0 µm. The mixed powder is adjusted so that the thermal expansion coefficient after mixing is substantially identical to the thermal expansion coefficient of the solid electrolyte layer 13b.

The mixed powder is then mixed with a solvent consisting of a burn-out material, a cellulose-based organic binder and water, and subjected to extrusion forming, thereby manufacturing the hollow plate-like flat support body formed body 11' having gas passages 12' therein, as shown in Fig. 4. The obtained support body formed body 11' is dried and calcined at 900 to 1200°C.

Subsequently, the inner electrode layer (the current collecting fuel electrode layer 23 and the active fuel electrode layer 13a), the current collector 2, the intermediate layer 3 and the solid electrolyte layer 13b are manufactured. Firstly, a paste for the active fuel electrode layer is manufactured by mixing, for example, NiO powder, Ni powder and YSZ powder, and adding a burn-out material thereto, and then mixing with an acrylic binder and toluene. Similarly, a paste for the current collector is manufactured by using, for example, LaCrO₃-based oxide powder. Similarly, a paste for the intermediate layer is manufactured by mixing, for example, NiO powder and Y₂O₃ powder.

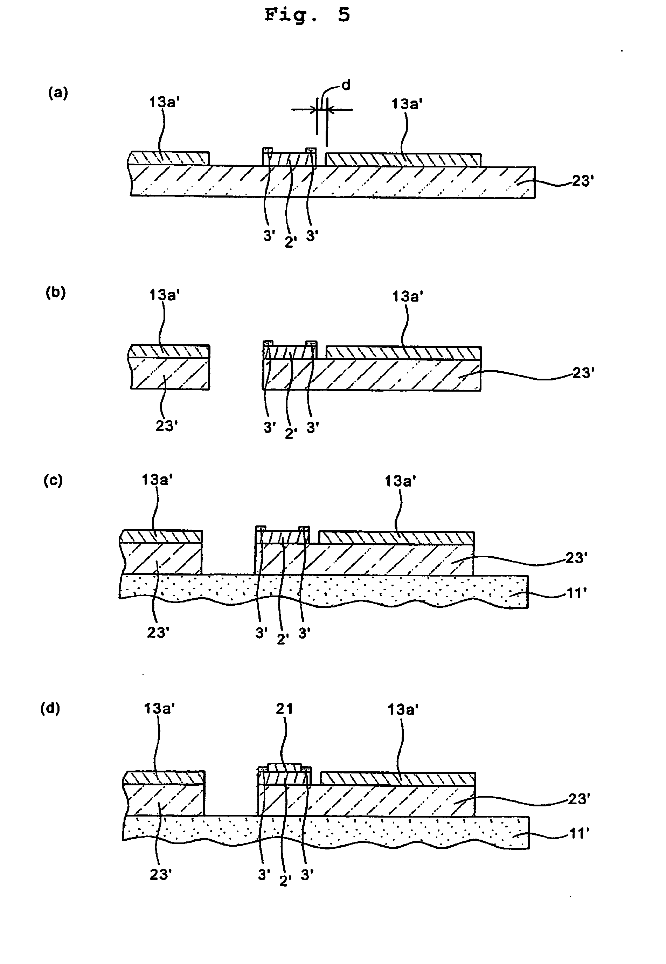

Subsequently, a tape 23' (a green sheet) for the current collecting fuel electrode layer shown in Fig. 5(a) that is a current collecting fuel electrode layer formed body is manufactured. Firstly, a slurry is made by mixing, for example, NiO powder, Ni powder and a rare earth element oxide such as Y₂O₃, and adding a burn-out material thereto, and then mixing with an acrylic binder and toluene. Then, the tape 23' for the current collecting fuel electrode layer having a thickness of 80 to 120 µm is obtained by applying this slurry by doctor blade method, followed by drying.

The respective pastes for the active fuel electrode layer, the current collector and the intermediate layer are sequentially printed on the tape 23' for the current collecting fuel electrode layer by using a predetermined mesh plate making, followed by drying. Thus, the active fuel electrode layer formed body 13a', the current collector formed body 2' and the intermediate layer formed body 3' are formed as shown in Fig. 5(a). Hereat, the paste for the current collector and the paste for the active fuel electrode layer are printed with the predetermined clearance d therebetween on the tape 23' for the current collecting fuel electrode layer, followed by drying.

Subsequently, as shown in Fig. 5(b), a plurality of portions for forming insulating sections are punched out in the tape 23' for the current collecting fuel electrode layer. In the fuel cell 13 disposed at the end portions of the support body 11, the tape 23' for the current collecting fuel electrode layer is punched out so that the respective end portions of the current collecting fuel electrode layer 23 and the active fuel electrode layer 13a (the respective end portions on the end portion side of the support body 11) correspond to the same position.

Thereafter, as shown in Fig. 5(c), the tape 23' for the current collecting fuel electrode layer with the active fuel electrode layer formed body 13a', the current collector formed body 2' and the intermediate layer formed body 3' formed thereon is stuck on the surface of the calcined support body formed body 11'. This step is repeated to stick in segmented-in-series, on the surface of the support body formed body 11', a plurality of the tapes 23' for the current collecting fuel electrode layer on which the active fuel electrode layer formed body 13a', the current collector formed body 2' and the intermediate layer formed body 3' are laminated.

Subsequently, in this state, the support body formed body 11' is dried and then calcined in the temperature range of 900 to 1300°C. Thereafter, as shown in Fig. 5(d), a masking tape 21 is stuck on a surface layer section of the current collector formed body 2' exposed from the calcined intermediate layer formed body 3'.

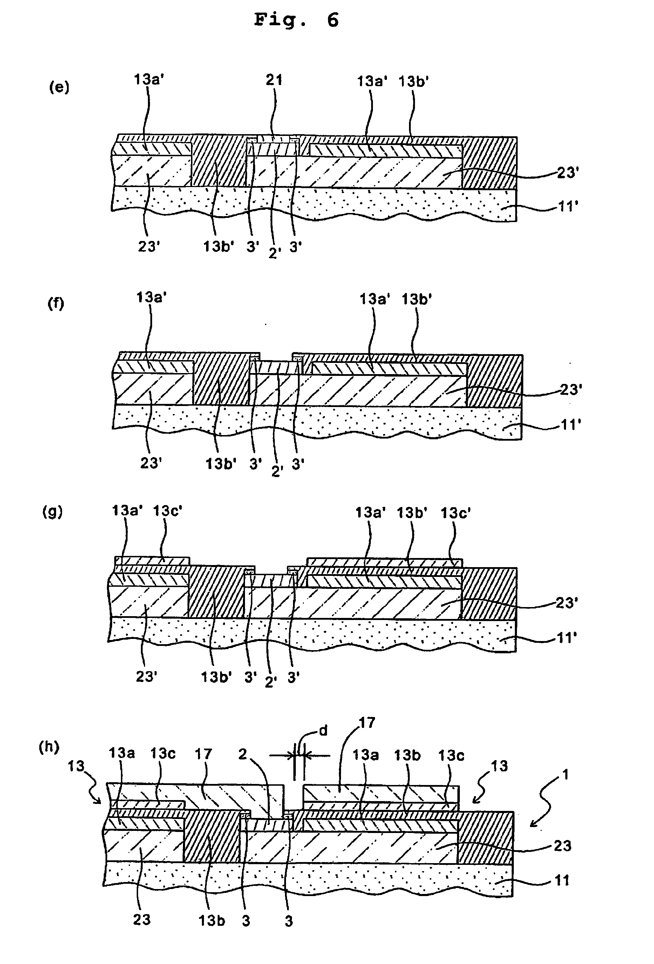

Subsequently, this laminate body is dipped into a solid electrolyte solution which is made into slurry by adding an acrylic binder and toluene into 8YSZ. This dipping allows the solid electrolyte layer formed body 13b' to be applied to the entire surface, and allows the solid electrolyte layer formed body 13b' to be disposed in the clearance d and the insulating sections lying between the adjacent cells, as well as at the end portions of the support body formed body 11', as shown in Fig. 6(e).

In this state, calcination is carried out under conditions of 600 to 1000°C for 2 to 4 hours. After calcination, the masking tape 21 and the unnecessary solid electrolyte layer formed body 13b' on the masking tape 21 are removed as shown in Fig. 6(f). Thereafter, sintering is carried out under conditions of 1450 to 1500°C for 2 to 4 hours in the state in which the tape 23' for the current collecting fuel electrode layer, the active fuel electrode layer formed body 13a', the current collector formed body 2', the intermediate layer formed body 3' and the solid electrolyte layer formed body 13b' are laminated on the support body formed body 11'.

Subsequently, as shown in Fig. 6(g), an outer electrode layer (an air electrode layer) formed body 13c' having a thickness of 10 to 100 µm is formed by printing slurry as a mixture of lanthanum cobaltite (LaCoO₃) and isopropyl alcohol onto the solid electrolyte layer formed body 13b' opposed to the active fuel electrode layer formed body 13a'. The formed air electrode layer formed body 13c' is burned under conditions of 950 to 1150°C for 2 to 5 hours.

Finally, as shown in Fig. 6(h), the segmented-in-series solid oxide fuel cell stack 1 is obtained by applying the intercell connection member 17 to the upper part of the current collector 2 exposed from the solid electrolyte layer 13b and the intermediate layer 3, and onto the air electrode layer 13c. The intercell connection member 17 is also applied onto the air electrode layer 13c of the fuel cell 13 located at the end portions of the support body 11.

Any lamination method selected from tape lamination, paste printing, dip coating and spraying may be used as the method of laminating the individual layers constituting the fuel cell 13. Dip coating is preferred because the drying step during lamination requires a short period of time, and from the viewpoint of the reduction in the time required for the step.

While the preferred embodiment of the present invention has been described and illustrated above, it is to be understood that the present invention is not limited to the foregoing embodiment, and is also applicable to those which are subject to change or improvement without departing from the spirit or scope of the present invention. For example, in the foregoing embodiment, the fuel cell 13 formed on the support body 11 have the laminate structure in which the inner electrode layer is made up of the active fuel electrode layer 13a and the current collecting fuel electrode layer 23, and the outer electrode layer is the air electrode layer 13c. The positional relationship between both electrodes can be reversed. That is, the fuel cell 13 can be formed by laminating on the support body 11 the air electrode layer 13c (the inner electrode layer), the solid electrolyte layer 13b, the active fuel electrode layer 13a and the current collecting fuel electrode layer 23 (the outer electrode layer) in this order. In this case, the oxygen-containing gas such as air is admitted into the gas passages 12 of the support body 11, and the fuel gas such as the hydrogen-containing gas is supplied to the outer surface of the active fuel electrode layer 13a (the current collecting fuel electrode layer 23) as the outer electrode layer.

Hereinafter, the present invention is described in more details based on practical examples, however, the present invention is not limited to the following examples.

### [Practical Examples]

### <Manufacturing of Fuel Cell Stacks>

The fuel cell stacks of Samples Nos. 1 to 3 shown in Table 1 were manufactured. Specifically, a support body formed body was firstly manufactured. The material of the support body formed body was obtained by blending and mixing NiO powder and Y₂O₃ powder to MgO powder whose mean particle diameter was 2.8 µm, and by adjusting so that the thermal expansion coefficient after mixing was substantially identical to the thermal expansion coefficient of the solid electrolyte layer (namely, 11.0×10⁻⁶(1/K)).

Subsequently, this mixed powder was mixed with a solvent consisting of a burn-out material, a cellulose-based organic binder and water, and subjected to extrusion forming, thereby manufacturing a hollow plate-like flat support body formed body having a gas passage therein (refer to Fig. 4). The obtained support body formed body was dried and calcined at 1200°C.

Subsequently, a paste for an active fuel electrode layer (a first inner electrode layer) was manufactured by mixing NiO powder and YSZ powder, and adding a burn-out material thereto, and then mixing with an acrylic binder and toluene. Similarly, a paste for a current collector is manufactured by using LaCrO₃-based oxide powder. Similarly, a paste for an intermediate layer is manufactured by mixing NiO powder and Y₂O₃ powder.

Subsequently, a slurry was made by mixing NiO powder and a rare earth element oxide of Y₂O₃, and adding a burn-out material thereto, and then mixing with an acrylic binder and toluene. Then, a tape for a current collecting fuel electrode layer (a second inner electrode layer) having a thickness of 130 µm was manufactured by applying this slurry by doctor blade method, followed by drying. A paste for an active fuel electrode layer, a paste for a current collector, and a paste for an intermediate layer were sequentially printed on the tape for the current collecting fuel electrode layer by using a predetermined mesh plate making, followed by drying (refer to Fig. 5(a)).

Hereat, the paste for the current collector and the paste for the active fuel electrode layer were printed and dried so that after sintering, they are arranged with a predetermined clearance d therebetween on the current collecting fuel electrode layer. That is, the clearance d was set to 0 µm in Sample No. 1, the clearance d was set to 30 to 50 µm in Sample No. 2, and the clearance d was set to 80 to 100 µm in Sample No. 3 (refer to Table 1).

After drying, the thickness of the active fuel electrode layer was 35 µm, the thickness of the current collector was 35 µm, and the thickness of the intermediate layer was 8 µm.

Subsequently, a plurality of portions for forming insulating sections were punched out in the tape for the current collecting fuel electrode layer (refer to Fig. 5(b)). In the fuel cell on the side of the end portions, the tape for the current collecting fuel electrode layer was punched out so that the respective end portions of the current collecting fuel electrode layer and the active fuel electrode layer correspond to the same position. Thereafter, the tape for the current collecting fuel electrode layer, on which the paste for the active fuel electrode layer, the paste for the current collector and the paste for the intermediate layer were printed, was stuck on the surface of the calcined support body formed body (refer to Fig. 5(c)).

Subsequently, in this state, the support body formed body was dried and then calcined in the temperature range of 900 to 1300°C. Thereafter, a masking tape was stuck on a surface layer section of the current collector formed body exposed from the calcined intermediate layer formed body (refer to Fig. 5(d)).

Subsequently, this laminate body was dipped into a solid electrolyte solution which was made into a slurry by adding an acrylic binder and toluene into 8YSZ. Owing to this dipping, the paste for the solid electrolyte layer was applied to the entire surface, and the paste for the solid electrolyte layer was applied into the clearance d and the insulating sections lying between the adjacent cells (refer to Fig. 6(e)).

In this state, calcination was carried out at 900°C for 2 hours. After calcination, the masking tape and the unnecessary solid electrolyte layer formed body on the masking tape were removed (refer to Fig. 6(f)). Thereafter, sintering was carried out under conditions of 1480°C for 2 hours in the state in which the current collecting fuel electrode layer formed body, the active fuel electrode layer formed body, the current collector formed body, the intermediate layer formed body and the solid electrolyte layer formed body were laminated on the support body formed body. Thus, the respective fuel cell stacks of Samples Nos. 1 to 3 shown in Table 1 were obtained. 5 fuel cell stacks for each of Samples Nos. 1 to 3 were manufactured.

### <Evaluations>

The obtained individual samples were subject to inspections for fuel cell separation and gas leak. The results of the separation rates, leak defect rates and the total yields in these samples are shown in Table 1.

In Table 1, the term "cell number" means the number of fuel cell. These fuel cells lack the air electrode layer. In the individual fuel cell stack, 7 fuel cells are arranged side by side on each surface of the support body, and a total of 14 fuel cells on both surfaces. As described above, the 5 fuel cell stacks for each sample were manufactured, and the number of the fuel cells evaluated per sample is 70.

The gas leak inspection was carried out by admitting He gas into the gas passage of the support body with the fuel cell stack dipped into water. The separation rate was calculated from the following equation: (Number of fuel cell causing separation/70)×100. The leak defect rate was calculated from the following equation: (Number of fuel cell causing leak defect/70)×100. The total yield was calculated from the following equation: [1-(Number of fuel cell causing separation or leak defect/70)]×100.

| | Sample No.1 | Sample No.2 | Sample No.3 |
|---|---|---|---|
| | Clearance d between active fuel electrode layer and current collector | | |
| | 0 µm | 30 to 50 µm | 80 to 100 µm |
| Cell number | 70 | 70 | 70 |
| Separation rate | 71.4% | 2.9% | 1.4% |
| Leak defect rate | 21.4% | 2.9% | 1.4% |
| Total yield | 7.2% | 94.2% | 97.2% |

As apparent from Table 1, in Sample No. 1 beyond the range of the present invention in which the clearance d between the active fuel electrode layer and the current collector was 0 µm, both separation and leak frequently occurred, and the total yield thereof was remarkably as low as 7.2%. The separation portion A and the leak portion B are shown in Fig. 7.

On the other hand, Samples No. 2 and 3 within the range of the present invention, in which the clearance d between the active fuel electrode layer and the current collector was 30 to 50 µm and 80 to 100 µm, respectively, caused less separation and leak, and their total yields were 90% or more. From the foregoing results, it can be said that a larger clearance between the active fuel electrode layer 13a and the current collector 2 suppresses the structural defect of the fuel cell, thus enabling the manufacture of the fuel cell stack being stable in terms of structure and performance.

## Claims

1. A segmented-in-series solid oxide fuel cell stack comprising:
an electrically-insulating porous support body having a gas passage therein;
a plurality of fuel cells arranged side by side on a surface of the support body,
each fuel cell having a first inner electrode layer; a current collector and a second inner electrode layer arranged side by side on the first inner electrode layer; and a solid electrolyte layer and an outer electrode layer sequentially laminated on the second inner electrode layer, and having a multilayer structure in which the solid electrolyte layer is extended and connected to the current collector through an intermediate layer,
wherein the current collector of one fuel cell and the outer electrode layer of the other fuel cell adjacent to the one fuel cell are electrically connected to each other through the current collector included in the one fuel cell, so that a plurality of the fuel cells are connected in series, and
the current collector and the second inner electrode layer are arranged with a clearance of 10 to 120 µm therebetween on the first inner electrode layer.

2. A segmented-in-series solid oxide fuel cell stack according to claim 1, wherein the support body comprises a flat plate shape, and a plurality of the fuel cells are arranged side by side on front and rear surfaces of the support body, respectively.

3. A fuel cell formed by storing in a storage container a plurality of the segmented-in-series solid oxide fuel cell stacks according to any of claims 1 and 2.

4. A method of manufacturing a segmented-in-series solid oxide fuel cell stack comprising the steps of:
obtaining an electrically-insulating porous support body having a gas passage therein;
arranging side by side a plurality of first inner electrode layers on a surface of the obtained support body, and arranging side by side on each of the first inner electrode layers a current collector and a second inner electrode layer with a clearance of 10 to 120 µm therebetween after sintering;
arranging side by side on the surface of the support body a plurality of fuel cells having a multilayer structure by disposing an intermediate layer on the current collector, and by laminating a solid electrolyte layer over the intermediate layer on the second inner electrode layer, and by laminating an outer electrode layer on the solid electrolyte layer; and
electrically connecting the current collector of one fuel cell and the outer electrode layer of the other fuel cell adjacent to the one fuel cell.

## Patentansprüche

1. In Reihe segmentierter Festoxid-Brennstoffzellenstapel, der Folgendes umfasst:
einen elektrisch isolierenden porösen Tragkörper mit einem Gasdurchgang darin;
mehrere nebeneinander auf einer Oberfläche des Tragkörpers angeordnete Brennstoffzellen,
wobei jede Brennstoffzelle Folgendes aufweist: eine erste innere Elektrodenschicht; einen Stromabnehmer und eine zweite innere Elektrodenschicht, die nebeneinander auf der ersten inneren Elektrodenschicht angeordnet sind; und eine Festelektrolytschicht und eine äußere Elektrodenschicht, die der Reihe nach auf die zweite innere Elektrodenschicht laminiert sind, und die eine mehrschichtige Struktur aufweist, bei der die Festelektrolytschicht durch eine Zwischenschicht ausgedehnt und mit dem Stromabnehmer verbunden ist,
wobei der Stromabnehmer von einer Brennstoffzelle und die äußere Elektrodenschicht der anderen Brennstoffzelle neben der einen Brennstoffzelle durch den in der einen Brennstoffzelle beinhalteten Stromabnehmer elektrisch miteinander verbunden sind, so dass mehrere der Brennstoffzellen in Reihe verbunden sind, und
der Stromabnehmer und die zweite innere Elektrodenschicht mit einem Abstand von 10 bis 120 µm dazwischen auf der ersten inneren Elektrodenschicht angeordnet sind.

2. In Reihe segmentierter Festoxid-Brennstoffzellenstapel nach Anspruch 1, wobei der Tragkörper eine ebene Plattenform umfasst und mehrere der Brennstoffzellen nebeneinander auf einer vorderen bzw. hinteren Oberfläche des Tragkörpers angeordnet sind.

3. Brennstoffzelle, die durch Lagern mehrerer der in Reihe segmentierten Festoxid-Brennstoffzellenstapel nach einem der Ansprüche 1 und 2 in einem Lagerbehälter gebildet wird.

4. Verfahren zum Herstellen eines in Reihe segmentierten Festoxid-Brennstoffzellenstapels, das Folgende Schritte umfasst:
Erhalten eines elektrisch isolierenden porösen Tragkörpers mit einem Gasdurchgang darin;
nebeneinander Anordnen von mehreren ersten inneren Elektrodenschichten auf einer Oberfläche des erhaltenen Tragkörpers, und nebeneinander Anordnen auf jeder der ersten inneren Elektrodenschichten eines Stromabnehmers und einer zweiten inneren Elektrodenschicht mit einem Abstand von 10 bis 120 µm dazwischen nach dem Sintern;
nebeneinander Anordnen auf der Oberfläche des Tragkörpers von mehreren Brennstoffzellen mit einer mehrschichtigen Struktur durch Anordnen einer Zwischenschicht auf dem Stromabnehmer und durch Laminieren einer Festelektrolytschicht über die Zwischenschicht auf der zweiten inneren Elektrodenschicht und durch Laminieren einer äußeren Elektrodenschicht auf die Festelektrolytschicht; und
elektrisches Verbinden des Stromabnehmers einer Brennstoffzelle und der äußeren Elektrodenschicht der anderen Brennstoffzelle neben der einen Brennstoffzelle.

## Revendications

1. Assemblage de piles à combustible à oxyde solide segmentées en série comportant:
un corps de support poreux d'isolation électrique ayant un passage pour gaz à l'intérieur de celui-ci ;
une pluralité de piles à combustible arrangées côte à côte sur une surface du corps de support,
chaque pile à combustible ayant une première couche d'électrode intérieure ; un collecteur de courant et une seconde couche d'électrode intérieure arrangés côte à côte sur la première couche d'électrode intérieure ; et une couche d'électrolyte solide et une couche d'électrode extérieure stratifiées de manière séquentielle sur la seconde couche d'électrode intérieure, et ayant une structure multicouche dans laquelle la couche d'électrolyte solide est étendue et connectée au collecteur de courant par le biais d'une couche intermédiaire,
dans lequel le collecteur de courant d'une pile à combustible et la couche d'électrode extérieure de l'autre pile à combustible adjacente à ladite une pile à combustible sont connectés électriquement l'un par rapport à l'autre par le biais du collecteur de courant compris dans ladite une pile à combustible, de telle sorte qu'une pluralité des piles à combustible sont montées en série, et
le collecteur de courant et la seconde couche d'électrode intérieure sont arrangés avec un espace allant de 10 à 120 µm entre eux sur la première couche d'électrode intérieure.

2. Assemblage de piles à combustible à oxyde solide segmentées en série selon la revendication 1, dans lequel le corps de support comporte une forme de plaque plate, et une pluralité de piles à combustible sont arrangées côte à côte sur des surfaces avant et arrière du corps de support, respectivement.

3. Pile à combustible formée en stockant dans un contenant de stockage une pluralité d'assemblages de piles à combustible à oxyde solide segmentées en série selon l'une quelconque des revendications 1 et 2.

4. Procédé de fabrication d'un assemblage de piles à combustible à oxyde solide segmentées en série comportant les étapes consistant à :
obtenir un corps de support poreux d'isolation électrique ayant un passage pour gaz à l'intérieur de celui-ci ;
arranger côte à côte une pluralité de premières couches d'électrode intérieures sur une surface du corps de support obtenu, et arranger côte à côte sur chacune des premières couches d'électrode intérieures un collecteur de couvrant et une seconde couche d'électrode intérieure avec un espace allant de 10 à 120 µm entre eux après une opération de frittage ;
arranger côte à côte sur la surface du corps de support une pluralité de piles à combustible ayant une structure multicouche en disposant une couche intermédiaire sur le collecteur de courant, et en stratifiant une couche d'électrolyte solide sur la couche intermédiaire sur la seconde couche d'électrode intérieure, et en stratifiant une couche d'électrode extérieure sur la couche d'électrolyte solide ; et
connecter électriquement le collecteur de courant d'une pile à combustible et la couche d'électrode extérieure de l'autre pile à combustible adjacente à ladite une pile à combustible.
